# EUROPEAN PATENT SPECIFICATION

(11) **EP 2 109 282 B1**
(45) Date of publication and mention of the grant of the patent: **10.03.2010**
(21) Application number: 08154393.6
(22) Date of filing: 11.04.2008
(51) Int. Cl.: H04L 29/06

(54) **Method and system for mitigation of distributed denial of service attacks based on IP neighbourhood density estimation**
Verfahren und System zur Abschwächung verteilter Dienstverweigerungsangriffe auf Grundlage einer Schätzung der Dichte der IP-Nachbarschaft
Procédé et système pour la réduction d'attaques distribuées de refus de service basés sur une estimation de densité de voisinage IP

(43) Date of publication of application: 14.10.2009
(73) Proprietor: Deutsche Telekom AG, 53113 Bonn (DE)
(72) Inventor: Roshandel, Mehran, 13591 Berlin (DE); Goldstein, Markus, 67655 Kaiserslautern (DE); Reif, Matthias, 67663 Kaiserslautern (DE); Stahl, Armin, 67663 Kaiserlautern (DE); Breue, Thomas, 67655 Kaiserslautern (DE)
(74) Representative: Vossius & Partner

(56) References cited:
- WO-A-2006/029399
- US-A1- 2005 249 214
- GARY PACK ET AL: "On Filtering of DDoS Attacks Based on Source Address Prefixes" TECHNICAL REPORT 1547, UNIVERSITY OF WISCONSIN-MADISON, DEPARTMENT OF COMPUTER SCIENCES, [Online] December 2005 (2005-12), XP002494933 Retrieved from the Internet: URL:http://pages.cs.wisc.edu/~estan/public ations/DDoSfiltering-tr.pdf> [retrieved on 2008-09-08]
- YOOHWAN KIM ET AL: "PacketScore: statistics-based overload control against distributed denial-of-service attacks" INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, vol. 4, 7 March 2004 (2004-03-07), pages 2594-2604, XP010740625 ISBN: 978-0-7803-8355-5

## Description

### Field of the Invention

The invention generally relates to mitigation of Distributed Denial of Service (DDoS) attacks on public available Internet services. Examples of such services include websites, Internet telephony (VoIP), FTP server, DNS, etc.

### Background of the Invention

In the Internet, Distributed Denial of Service attacks (DDoS) have become a major threat today. Large scaled networks of infected PCs (bots or zombies) combine their bandwidth and computational power in order to overload a publicly available service and denial it for legal users. All public servers are basically vulnerable to DDoS attacks due to the open structure of the Internet. The bots are usually acquired automatically by hackers who use software tools to scan through the network, detecting vulnerabilities and exploiting the target machine.

The number of such DDoS incidents is steadily increasing. For example, the attacks against large e-commerce sites in February 2000 and the attacks against root DNS servers in 2003 and 2007 have drawn public attention to the problem of DDoS attacks. Today, mainly mid-sized websites are attacked by criminals in order to extort protection money from their owners without attracting too much public attention. Besides that, also Internet Service Providers (ISP) have to deal with the problem that DDoS traffic is congesting their link bandwidths.

The bot software also evolved alarmingly over time. Early tools like *TFN*, *Stacheldraht, Trinoo* or *Mstream* used unencrypted and hierarchically organized communication structures. Most of these tools used TCP-SYN, UDP or ICMP floods with possibly identifiable parameters. Since some of these attacks have successfully been mitigated, a new generation of bots arose. *-SDBot, Agobot* or the very enhanced *Phatbot* are known representatives which use IRC as a robust and secure communication. These tools also contain methods for spreading themselves and have more sophisticated attack algorithms, which could be upgraded over the Internet. The attack traffic from those tools looks like legal traffic on the transport layer, which makes it nearly impossible to filter it effectively with standard firewalls.

Mitigating DDoS attacks at the origin or within the core of the Internet seems to be an impossible task due to the distributed and authorization-free nature of the IP based network. Approaches to achieve this objective typically rely on changing current internet protocols and are therefore not easily applicable. Ingress filtering as described in RFC 2827 (P. Ferguson and D. Senie, "Network ingress filtering: Defeating denial of service attacks which employ IP source address spoofing," United States, 2000, available at: http://rfc.net/rfc2827.html.) also helps mitigating DDoS attacks with forged source IP addresses (IP spoofing) and should be applied by every ISP. Since ingress filtering only helps other ISPs on the Internet and not the one who is actually applying it, it took quite a long time until it was setup in many places. Furthermore, Savage et al. (S. Savage, D. Wetherall, A. R. Karlin, and T. Anderson, "Practical network support for IP traceback,'" in SIGCOMM, 2000, pp. 295-306) suggested IP Traceback to find the source of spoofed IP addresses by probabilistically marking packets. Nowadays, IP spoofing is not that common any more in DDoS attacks, except for the last octet of an IP address.

Peng et al. (T. Peng, C. Leckie, and K. Ramamohanarao, "Protection from Distributed Denial of Service attack using history-based IP filtering" in Proceedings of the IEEE International Conference on Communications (ICC 2003). Anchorage. AL, USA: IEEE, 2003) suggest a system that monitors sources during normal operation (without experiencing attacks) to learn or establish a source address data base. In case of an attack this information is used to block new sources never monitored before. This approach is based on the assumption that during an attack no new or unknown sources request access to a server - otherwise they would be blocked.

Thus, today, there is a strong need to mitigate DDoS attacks near the target, which seems to be the only solution to the problem in the current internet infrastructure. The aim of such a protection system is to limit their destabilizing effect on the server through identifying malicious requests.

Thus, Distributed Denial of Service (DDoS) attacks are today the most destabilizing factor in the global Internet and there is a strong need for sophisticated solutions.

US-A-2005/249214 describes a system and method according to the preamble of claim 1. Further reference is made to GARY PACK ET AL: "On Filtering of DDoS Attacks Based on Source Address Prefixes" TECHNICAL REPORT 1547, UNIVERSITY OF WISCONSIN- MADISON, DEPARTMENT OF COMPUTER SCIENCES, December 2005.

### Summary of the Invention

According to a first aspect, the invention provides a method of protecting computer systems from attacks over a network to which the computer system is connected, the method comprising the steps of: (a) establishing, during attack-free operation of the computer system, a database in the form of a source-IP-histogram storing all requests received from all sender at the computer system; (b) calculating and storing a smoothed source-IP-histogram from the source-IP-histogram obtained in step a); (c) applying a probability threshold on the smoothed source-IP-histogram to differentiate between acceptable sender and sender to be rejected; (d) monitoring requests to the computer system; (e) accepting a new sender for which there was no entry in the source-IP-histogram before smoothing if its assumed probability value derived from the smoothed-IP-histogram exceeds the threshold. The smoothed-IP-histogram represents the probability of a particular sender of being a legitimate sender. Preferably, the calculation of the smoothed source-IP-histogram in step b) is made considering the neighbourhood relationships of the sender. Furthermore, the method preferably comprises the step of normalizing the smoothed-IP-histogram.

Preferably, step b) of calculating and storing a smoothed histogram is performed repeatedly in predefined time intervals.

According to a preferred embodiment of the invention, the smoothing is performed by estimating a source-density function. For example, a kernel density estimation, or convolution is used for the smoothing.

The smoothing of the histogram is based on the fact that the probability that a new source appears in the neighbourhood of already observed sources, is higher compared to areas where only a few requests or sources have been observed.

It is furthermore preferred that the distance between two sources is defined as the highest order bit of two IP addresses being different added to their Euclidean distance. For example, the two IP addresses 365 (110110101) and 346 (101011010) have the highest order different bit of 000100000 = 32. Their Euclidean distance is 365-346 = 19. Then, the distance is the sum 32+19 = 51. In case networks are used as sources, the numerically smallest IP address is used for the calculation.

The method of the invention further comprises the steps of setting a threshold for smoothed source-IP-histogram to differentiate between acceptable sender and sender to be rejected; and accepting a sender or rejecting a sender depending on whether the sender is above or below the threshold. The threshold may be a dynamic threshold, depending on the server load or bandwidth usage of the computer system. For example, a low threshold value accepts many (too many) requests in the case of an attack, thus not necessarily preventing an overload. A threshold of zero can be considered as the normal operation mode of the system of the invention not dropping any requests. During an ongoing attack, a higher threshold will be determined. Preferably, the determination of the threshold is achieved in an adaptive process. Starting from a estimated threshold , the requests are monitored. If more requests are measured than the server could constantly handle, the threshold is raised. On the other hand, if the threshold is greater than zero and the measured requests are below the limit of the system, the threshold is lowered again. For a constant attack strength, this process converges to a limit threshold where the server operates just below its maximum acceptable load level. If the attack load varies over time, the threshold adapts to it, keeping the server always below its capacity limit.

According to a further preferred embodiment, the method further comprises of a throttling algorithm. Either the bandwidth or the number of requests per time interval are limited for each sender. The exact value of the limit is determined corresponding to the estimated density function of the sender in the smoothed histogram. The single limits are chosen such that their sum does not exceed the server's capacity.

A request within the meaning of the invention is preferably an IP packet, an e-mail, a DNS request, a FTP download, a VoIP call or a HTTP request.

According to a second aspect, the invention provides a system for protecting computer systems from attacks over a network to which the computer system is connected, the system comprising: means for establishing, during attack-free operation of the computer system, a database in the form of a source-IP-histogram storing all request received from all sender at the computer system; means for calculating and storing a smoothed source-IP-histogram from the source-IP-histogram; means for applying a probability threshold on the smoothed source-IP-histogram to differentiate between acceptable sender and sender to be rejected; means for monitoring requests to the computer system; and means for accepting a new sender if its assumed probability value derived from the smoothed-IP-histogram exceeds the threshold.

### Brief Description of the Drawings

Preferred embodiments of the invention are described in more detail below with reference to the attached drawings, which are by way of example only.
- Fig. 1: shows a data flow diagram according to a preferred embodiment of the invention; and
- Fig. 2: shows an example for a source-IP-histogram established according to the invention together with its smoothed curve.

### Detailed Description

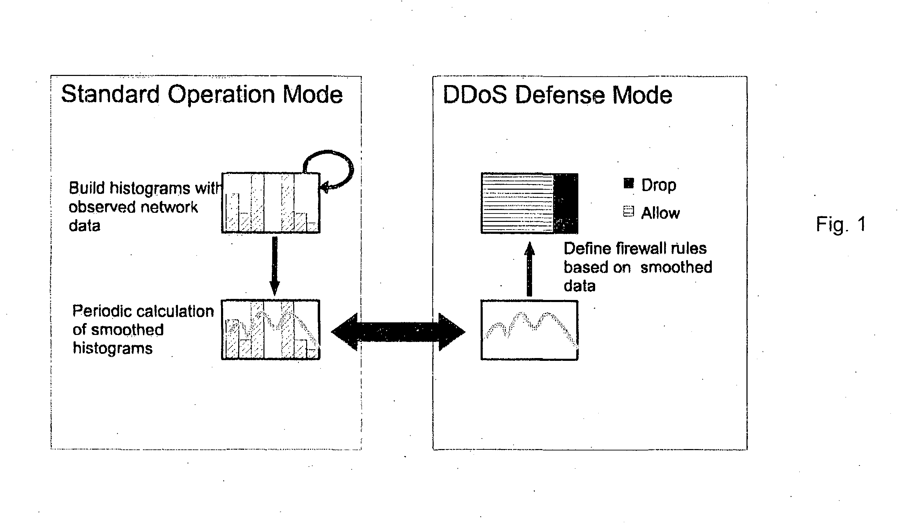

Fig. 1 shows a data flow diagram according to a preferred embodiment of the invention. As shown in Fig. 1, during normal use of the computer system, i.e. without experiencing any attack, the system undergoes a learning process to learn or establish a histogram representing all requests of all sources or sender, respectively. In this process, a smoothing of the histogram is repeatedly calculated, for example in predefined time intervals. Such time interval may be in the range of one or more hours (for example, if only few data are available at the beginning), and may increase up to one or more days, if data for several days are already available and a lower information gain is expected. Thus, the length of the time interval may change dynamically. Once an attack takes place, the actual data traffic is monitored and it is determined whether in case of a new sender or source this is located (in terms of its address) close to already known sender. According to the preferred embodiment of Fig. 1, a threshold is then used to differentiate between acceptable sender and sender to be rejected. The threshold is preferably a dynamic threshold.

On the basis if the smoothed-IP-histogram data, firewall rules are defined, for example to describe which source IP addresses are to be blocked, such as "131.246.196.0-131.246.196.128 DENY".

According to another embodiment which may, however, be combined with the first embodiment of determining thresholds, certain requests or sender are not completely blocked if they are below the threshold. Rather, the number of accepted requests or the provided bandwidth for a particular sender is throttled, i.e. some requests are delayed or even denied. Technically, this corresponds to an artificial limitation of the bandwidth available for this particular sender by queuing or dropping IP packets, also known as bandwidth throttling, traffic shaping or policing. In this embodiment, there is no clear cut border line (or threshold) in the rankling list. The limit rather correlates with the value of the estimated density function for this sender. For example, no limit is applied to sender with high estimates in the smoothed histogram, whereas the number of provided bandwidth of sender with a low value is limited very strictly. The sum of all limits depends on the server load of the computer system such that an overload is prevented.

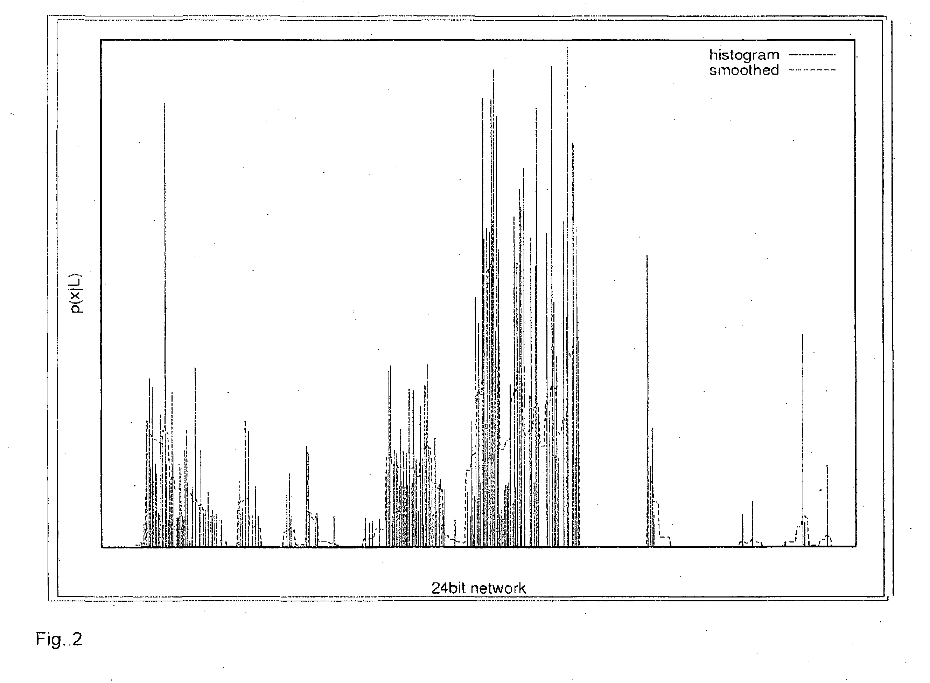

Fig. 2 shows an example of a source-IP-histogram established according to the invention for a 24 bit network. The classes ("Bins") of the histogram represent the sender. Sender can be individual IP addresses, IP networks of identical or different size, for example networks with a net mask of 24bit. Fig. 2 also shows the smoothed histogram of the sources with a defined distance measure that was calculated using a kernel-density-estimator with a Gauss-kernel. The bars show the frequency p of a certain source or sender xᵢ, respectively. The distance measure is the defined distance function, for example, as mentioned above, the distance between two sources is defined as the highest order bit of two IP addresses being different added to their Euclidean distance.

If during an attack new sources are monitored that have an IP address between two frequently seen addresses (or address intervals), these new sources are likely to be accepted (depending on the threshold) whereas conventional techniques would have blocked such unknown sources completely.

For example, the IP address 192.168.1.0 has been monitored 10 times in the past. All other neighbours have not been seen in the past. This would result in a single spike for this particular IP address in the source-iP-histogram. For obtaining the smoothed source-iP-histogram, it is assumed for this example that the kernel-function provides a value of "2" for the distance of 1, "1" for the neighbour having a distance of 2, "0.5" for neighbours with a distance of 3 or 4 and "0" for all other neighbours. With this Euclidean distance function, the following values in the smoothed source-IP-histogram would be obtained:
192.168.0.253: 0.5
192.168.0.254: 1
192.168.0.255:2
192.168.1.0: 10
192.168.1.1: 2
192.168.1.2: 1
192.168.1.3: 0.5

On the other hand, using the above-mentioned distance function, the addresses 192.168.0.255 and 192.168,1.0 have a distance of 256+1 = 257 (and not 1 as above) so that the result would be:
192.168.0.253: 0 (distance of 256+3 = 259 to 192.168.1.0)
192.168.0.254: 0 (distance of 256+2 = 258 to 192.168.1.0)
192,168.0.255: 0 (distance of 256+1 = 257 to 192.168.1.0)
192.168.1.0: 10
192.168.1.1: 1 (distance of 1+1 =2 to 192.168.1.0)
192.168.1.2: 0.5 (distance of 2+2 = 4 to 192.168.1.0)
192.168.1.3: 0 (distance of 2+3 = 5 to 192.168.1.01

This means that the sources being in the neighbourhood in terms of their IP-address numbers but are in fact from another network do not get a higher value. Thus, this distance measure is advantageous as it also takes into account the different networks.

The result of the smoothing is that requests from IP addresses 192.168.1.1 and 192.168.1.2 are not automatically rejected because the IP-histogram contains no data for these addresses. Rather, depending on the threshold, requests from 192.168.1.1 might be accepted as its assumed probability of being from a legitimate sender is above the probability threshold.

According to a further preferred embodiment, the efficiency and collateral damage are estimated using the method of the invention. Efficiency is defined as the desired blocking of non-legitimate requests (sender), and the erroneous blocking of legitimate sender is defined as collateral damage. An ideal system would have an efficiency of 100% and 0% collateral damage. With the invention it is possible to estimate values for efficiency and collateral damage even prior to the occurrence of an attack, and to determine optimal rules for the firewall. In order to simulate the collateral damage, a point in time t in the past is selected. On the basis of the smoothed IP histogram at time t, different sets of rules Rθ can be defined by different thresholds θ (for example, the higher the threshold, the more sources are blocked). For each set of rules Rθ the collateral damage can be calculated using the requests after time t. For simulating the efficiency prior to an attack assumptions have to be made with respect to the distribution of an attack. In the case of a highly distributed attack a uniform distribution of the attacker over the entire (routed) address space can be assumed. The efficiency can then be directly calculated from the sets of rules Rθ.

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems described by the language of the claims and the equivalents thereof.

## Claims

1. Method of protecting computer systems from attacks over a network to which the computer system is connected, the method comprising the steps of:
a. establishing, during attack-free operation of the computer system, a database in the form of a source-IP-histogram storing all requests received from all sender at the computer system;
b. calculating and storing a smoothed source-IP-histogram from the source-IP-histogram obtained in step a), the smoothed-IP-histogram representing the probability of a particular sender of being a legitimate sender;
c. applying a threshold on the smoothed source-IP-histogram to differentiate between acceptable sender and sender to be rejected;
d. monitoring requests to the computer system;
e. accepting a new sender for which there was no entry in the source-IP-histogram before smoothing if the assumed probability value for the source address of the new sender derived from the smoothed-IP-histogram exceeds the threshold.

2. The method of claim 1, wherein the calculation of the smoothed source-IP-histogram in step b) is made considering the neighbourhood relationships of the sender.

3. The method of any of the preceding claims, wherein step b) of calculating and storing a smoothed histogram is performed repeatedly in predefined time intervals.

4. The method of any of the preceding claims, wherein the smoothing is performed by estimating a source-density function.

5. The method of any of the claims 2 to 4, wherein the distance between two sources is defined as the highest order bit of two IP addresses being different added to their Euclidean distance.

6. The method of any of the preceding claims, wherein the threshold is a dynamic threshold, depending on the server load or bandwidth usage of the computer system.

7. The method of any of the preceding claims, wherein the smoothed-IP-histogram represents the probability of a particular sender of being a legitimate sender.

8. The method of any of the preceding claims, wherein step b) comprising the step of normalizing the smoothed-IP-histogram.

9. The method of any of claims 1 to 4, further comprising the step of throttling a particular sender

10. The method of claim 9, wherein the number of IP-packets of a sender to be rejected depends on the value of the estimated density function for this sender.

11. The method of any of the preceding claims, wherein a request is an IP packet, an e-mail, a DNS request, a FTP download, a VoIP call or a HTTP request.

12. System for protecting a computer system from attacks over a network to which the computer system is connected, the system comprising:
means for monitoring requests to the computer system;
means for establishing, during attack-free operation of the computer system, a database in the form of a source-IP-histogram storing all request received from all sender at the computer system;
**characterized by**
means for calculating and storing a smoothed source-IP-histogram from the source-IP-histogram, the smoothed-IP-histogram representing the probability of a particular sender of being a legitimate sender;
means for applying a probability threshold on the smoothed source-IP-histogram to differentiate between acceptable sender and sender to be rejected; and
means for accepting a new sender for which there was no entry in the source-IP-histogram before smoothing if the assumed probability value for the source address of the new sender derived from the smoothed-IP-histogram exceeds the threshold.

## Patentansprüche

1. Verfahren zum Schutz von Computersystemen vor Angriffen über ein Netzwerk, an welches das Computersystem angeschlossen ist, wobei das Verfahren die Schritte aufweist:
a. Erstellen einer Datenbank in Form eines Quell-IP-Histogramms während des angriffsfreien Betriebs des Computersystems, welche alle von allen Sendern an das Computersystem empfangenen Anforderungen speichert;
b. Berechnen und Speichern eines geglätteten Quell-IP-Histogramms aus dem in Schritt a) erhaltenen Quell-IP-Histogramm, wobei das geglättete IP-Histogramm die Wahrscheinlichkeit darstellt, dass ein bestimmter Sender ein legitimer Sender ist;
c. Anwenden einer Schwelle auf das geglättete Quell-IP-Histogramm, um zwischen einem annehmbaren Sender und einem Sender, der zurückgewiesen werden soll, zu unterscheiden;
d. Überwachen der Anforderungen an das Computersystem;
e. Akzeptieren eines neuen Senders, für welchen es vor der Glättung keinen Eintrag im Quell-IP-Histogramm gab, wenn der angenommene Wahrscheinlichkeitswert für die Quell-Adresse des neuen Senders, der aus dem geglätteten IP-Histogramm abgeleitet wurde, die Schwelle übersteigt.

2. Verfahren nach Anspruch 1, wobei die Berechnung des geglätteten Quell-IP-Histogramms in Schritt b) unter Berücksichtigung der Nachbarschaftsverhältnisse des Senders erfolgt.

3. Verfahren nach einem der vorhergehenden Ansprüche, wobei Schritt b) der Berechnung und Speicherung eines geglätteten Histogramms in vorbestimmten Zeitintervallen wiederholt ausgeführt wird.

4. Verfahren nach einem der vorhergehenden Ansprüche, wobei das Glätten durch Abschätzung einer Quell-Dichtefunktion ausgeführt wird.

5. Verfahren nach einem der Ansprüche 2 bis 4, wobei die Distanz zwischen zwei Quellen definiert ist als das höchstwertige Bit zweier unterschiedlicher IP-Adressen addiert zu deren euklidischer Distanz.

6. Verfahren nach einem der vorhergehenden Ansprüche, wobei die Schwelle eine dynamische Schwelle ist, die von der Serverlast oder der Bandbreitennutzung des Computersystems abhängig ist.

7. Verfahren nach einem der vorhergehenden Ansprüche, wobei das geglättete IP-Histogramm die Wahrscheinlichkeit darstellt, dass ein bestimmter Sender ein legitimer Sender ist.

8. Verfahren nach einem der vorhergehenden Ansprüche, wobei Schritt b) den Schritt der Normalisierung des geglätteten IP-Histogramms umfasst.

9. Verfahren nach einem der Ansprüche 1 bis 4, ferner aufweisend den Schritt des Drosselns eines bestimmten Senders.

10. Verfahren nach Anspruch 9, wobei die Anzahl von IP-Paketen eines Senders, die zurückgewiesen werden sollen, von dem Wert der abgeschätzten Dichtefunktion für diesen Sender abhängt.

11. Verfahren nach einem der vorhergehenden Ansprüche, wobei eine Anforderung ein IP-Paket, eine E-Mail, eine DNS-Anforderung, ein FTP-Herunterladevorgang, ein VoIP-Anruf oder eine HTTP-Anforderung ist.

12. System zum Schutz von Computersystemen vor Angriffen über ein Netzwerk, an welches das Computersystem angeschlossen ist, wobei das System aufweist:
Mittel zum Überwachen von Anforderungen an das Computersystem;
Mittel zur Erstellung einer Datenbank in Form eines Quell-IP-Histogramms während des angriffsfreien Betriebs des Computersystems, welche alle von allen Sendern an das Computersystem empfangenen Anforderungen speichert;
**gekennzeichnet durch**
Mittel zur Berechnung und Speicherung eines geglätteten Quell-IP-Histogramms aus dem Quell-IP-Histogramm, wobei das geglättete IP-Histogramm die Wahrscheinlichkeit darstellt, dass ein bestimmter Sender ein legitimer Sender ist;
Mittel zur Anwendung einer Wahrscheinlichkeitsschwelle auf das geglättete Quell-IP-Histogramm, um zwischen einem annehmbaren Sender und einem Sender, der zurückgewiesen werden soll, zu unterscheiden; und
Mittel zur Annahme eines neuen Senders, für welchen es vor der Glättung keinen Eintrag im Quell-IP-Histogramm gab, wenn der angenommene Wahrscheinlichkeitswert für die Quell-Adresse des neuen Senders, der aus dem geglätteten IP-Histogramm abgeleitet wurde, die Schwelle übersteigt.

## Revendications

1. Procédé de protection de systèmes informatiques contre les attaques sur un réseau auquel le système informatique est connecté, le procédé comprenant les étapes consistant à :
a. établir, pendant un fonctionnement sans attaque du système informatique, une base de données sous forme d'histogramme d'IP source mémorisant toutes les requêtes reçues de tous les expéditeurs au niveau du système informatique ;
b. calculer et mémoriser un histogramme d'IP source lissé d'après l'histogramme d'IP source obtenu à l'étape a), l'histogramme d'IP source lissé représentant la probabilité qu'un expéditeur particulier soit un expéditeur légitime ;
c. appliquer un seuil à l'histogramme d'IP source lissé pour distinguer un expéditeur acceptable d'un expéditeur à rejeter ;
d. surveiller les requêtes sur le système informatique ;
e. accepter un nouvel expéditeur pour lequel il n'y avait pas d'entrée dans l'histogramme d'IP source avant le lissage si la valeur de probabilité supposée pour l'adresse source du nouvel expéditeur tirée de l'histogramme d'IP source lissé dépasse le seuil.

2. Procédé selon la revendication 1, dans lequel le calcul de l'histogramme d'IP source lissé à l'étape b) est effectué en tenant compte des relations de voisinage de l'expéditeur.

3. Procédé selon l'une quelconque des revendications précédentes, dans lequel l'étape b) de calcul et de mémorisation d'un histogramme lissé est effectuée de manière répétée dans des intervalles de temps prédéfinis.

4. Procédé selon l'une quelconque des revendications précédentes, dans lequel le lissage est effectué en estimant une fonction de densité d'une source.

5. Procédé selon l'une quelconque des revendications 2 à 4, dans lequel la distance entre deux sources est définie comme le bit de poids fort de deux adresses IP qui sont différentes, ajouté à leur distance euclidienne.

6. Procédé selon l'une quelconque des revendications précédentes, dans lequel le seuil est un seuil dynamique dépendant de la charge du serveur ou de l'utilisation de la bande passante du système informatique.

7. Procédé selon l'une quelconque des revendications précédentes, dans lequel l'histogramme d'IP lissé représente la probabilité qu'un expéditeur particulier soit un expéditeur légitime.

8. Procédé selon l'une quelconque des revendications précédentes, dans lequel l'étape b) comprend l'étape de normalisation de l'histogramme d'IP lissé.

9. Procédé selon l'une quelconque des revendications 1 à 4, comprenant en outre l'étape de limitation d'un expéditeur particulier.

10. Procédé selon la revendication 9, dans lequel le nombre de paquets IP d'un expéditeur à rejeter dépend de la valeur de la fonction de densité estimée pour cet expéditeur.

11. Procédé selon l'une quelconque des revendications précédentes, dans lequel une requête est un paquet IP, un e-mail, une requête DNS, un téléchargement FTP, un appel VoIP ou une requête HTTP.

12. Système pour protéger un système informatique contre les attaques sur un réseau auquel le système informatique est connecté, le système comprenant :
des moyens pour surveiller les requêtes sur le système informatique ;
des moyens pour établir, pendant un fonctionnement sans attaque du système informatique, une base de données sous forme d'histogramme d'IP source mémorisant toutes les requêtes reçues de tous les expéditeurs au niveau du système informatique ;
**caractérisé par**
des moyens pour calculer et mémoriser un histogramme d'IP source lissé d'après l'histogramme d'IP source, l'histogramme d'IP source lissé représentant la probabilité qu'un expéditeur particulier soit un expéditeur légitime ;
des moyens pour appliquer un seuil de probabilité à l'histogramme d'IP source lissé pour distinguer un expéditeur acceptable d'un expéditeur à rejeter ; et
des moyens pour accepter un nouvel expéditeur pour lequel il n'y avait pas d'entrée dans l'histogramme d'IP source avant le lissage si la valeur de probabilité supposée pour l'adresse source du nouvel expéditeur tirée de l'histogramme d'IP source lissé dépasse le seuil.
